# EUROPÄISCHE PATENTSCHRIFT

(11) **EP 3 353 863 B1**
(45) Veröffentlichungstag und Bekanntmachung des Hinweises auf die Patenterteilung: **02.11.2022**
(21) Anmeldenummer: 16762807.2
(22) Anmeldetag: 07.09.2016
(51) Int. Cl.: H01T 4/12, H01T 21/00, H01T 4/16

(54) **ÜBERSPANNUNGSSCHUTZBAUELEMENT UND VERFAHREN ZUR HERSTELLUNG EINES ÜBERSPANNUNGSSCHUTZBAUELEMENTS**
SURGE PROTECTION COMPONENT AND METHOD FOR PRODUCING A SURGE PROTECTION COMPONENT
COMPOSANT DE PROTECTION CONTRE LES SURTENSIONS ET SON PROCÉDÉ DE FABRICATION

(30) Priorität: 25.09.2015 DE 102015116278
(43) Veröffentlichungstag der Anmeldung: 01.08.2018
(73) Patentinhaber: TDK Electronics AG, 81671 München (DE)
(72) Erfinder: RINNER, Franz, 8523 Frauental an derr Lassnitz (AT)
(74) Vertreter: Epping - Hermann - Fischer
(86) Internationale Anmeldenummer: PCT/EP2016/071110
(87) Internationale Veröffentlichungsnummer: WO 2017/050579

(56) Entgegenhaltungen:
- WO-A1-2012/093081
- WO-A2-2013/009661
- US-A1- 2007 285 866
- US-A1- 2012 236 450

## Beschreibung

Die vorliegende Erfindung betrifft ein Überspannungsschutzbauelement sowie ein Verfahren zur Herstellung eines Überspannungsschutzbauelementes. Überspannungsschutzbauelemente können als Kurzschlussschalter im Fall einer Überspannung eingesetzt werden, und dienen somit als Schutz einer mit ihnen verbundenen Schaltungsanordnung vor Beschädigung durch eine Überspannung. WO 2013/009661 A2 zeigt ein Überspannungsschutzbauelement, das einen Mehrschichtaufbau aus keramischen Schichten und Innenelektroden aufweist, wobei die Innenelektroden durch einen gasgefüllten Hohlraum unterbrochen sind.

Das Dokument US 2007/285866 offenbart einen Überspannungsschutzbauelement, aufweisend einen Grundkörper, der zumindest eine Innenelektrode, die zwischen zwei keramischen Schichten angeordnet ist, aufweist, wobei die zumindest eine Innenelektrode von zumindest einer Seitenfläche des Grundkörpers zurückversetzt ist, wobei zwischen der zumindest einen Innenelektrode und der zumindest einen Seitenfläche ein gasgefüllter Hohlraum ist, und wobei auf zwei einander gegenüberliegenden Seitenflächen des Grundkörpers jeweils eine Außenelektrode angeordnet ist, wobei die zumindest eine Innenelektrode von zwei einander gegenüberliegenden Seitenflächen des Grundkörpers jeweils zurückversetzt ist und wobei jeweils ein gasgefüllter Hohlraum zwischen der zumindest einen Innenelektrode und der jeweiligen Seitenfläche angeordnet ist.

Aufgabe der vorliegenden Erfindung ist es, ein verbessertes Überspannungsschutzbauelement und ein Verfahren zu dessen Herstellung anzugeben.

Diese Aufgabe wird durch ein Überspannungsschutzbauelement gemäß Anspruch 1 gelöst. Ferner wird die Aufgabe durch ein Verfahren gemäß dem zweiten unabhängigen Anspruch gelöst.

Es wird ein Überspannungsschutzbauelement vorgeschlagen, das einen Grundkörper, der zumindest eine Innenelektrode, die zwischen zwei keramischen Schichten angeordnet ist, aufweist, wobei die zumindest eine Innenelektrode von zumindest einer Seitenfläche des Grundkörpers zurückversetzt ist, wobei zwischen der zumindest einen Innenelektrode und der zumindest einen Seitenfläche ein gasgefüllter Hohlraum ist, und wobei auf zwei einander gegenüberliegenden Seitenflächen des Grundkörpers jeweils eine Außenelektrode angeordnet ist. Das Überspannungsschutzbauelement kann mehr als eine Innenelektrode aufweisen, wobei jede Innenelektrode zwischen zwei keramischen Schichten angeordnet ist. Jede der Innenelektroden ist von zumindest einer Seitenfläche des Grundkörpers zurückversetzt, wobei zwischen der jeweiligen Innenelektrode und der Seitenfläche ein gasgefüllter Hohlraum ist.

Der gasgefüllte Hohlraum kann insbesondere als Funkenstrecke genutzt werden. Dementsprechend wirkt der gasgefüllte Hohlraum isolierend, sofern zwischen der Innenelektrode und den Außenelektroden eine Spannung anliegt, die eine vorherbestimmte Durchschlagsspannung nicht überschreitet. Bei Überschreiten der Durchschlagsspannung wird das in dem gasgefüllten Hohlraum angeordnete Gas ionisiert und die Außenelektroden werden über die Innenelektrode und die in dem Hohlraum nunmehr ausgebildete Funkenstrecke leitend miteinander verbunden. Auf diese Weise kann es zu einem Kurzschluss kommen. Dadurch, dass dieser Kurzschluss in dem Überspannungsschutzbauelement ausgelöst wird, kann eine mit dem Überspannungsschutzbauelement verschaltete Schaltungsanordnung vor Beschädigung geschützt werden.

Bei dem Gas kann es sich beispielsweise um Stickstoff oder ein Edelgas handeln. Alternativ kann es sich bei dem Gas beispielsweise um Luft oder ein Gasgemisch handeln. Das Gasgemisch kann einen oder mehrere der Stoffe Argon, Neon und Wasserstoff aufweisen.

Das oben beschriebene Überspannungsschutzbauelement zeichnet sich durch eine platzsparende Bauweise aus. Dadurch, dass die Innenelektroden gegenüber der Seitenfläche zurückversetzt sind, kann die Funkenstrecke in den Grundkörper des Überspannungsschutzbauelementes integriert sein. Das Zurücksetzen der Innenelektroden kann durch einen selektiven Ätzprozess realisiert werden, bei dem die Innenelektroden in gezielter Weise gegenüber der Seitenfläche zurückgesetzt werden, indem Material der Innenelektroden abgetragen wird. Dieses Verfahren ermöglicht es, sehr kleine Hohlräume mit hoher Präzision zu fertigen. Es können beispielsweise Hohlräume mit einer Länge zwischen 5 und 20 µm, vorzugsweise mit einer Länge von 10 µm, gefertigt werden. Auf diese Weise lassen sich die gewünschte Durchschlagsspannungen einstellen.

Wie hier beschrieben reicht eine einzige Innenelektrode für das Überspannungsschutzbauelement aus. In einer alternativen Ausführungsform kann das Überspannungsschutzbauelement mehrere in einer Stapelrichtung übereinander angeordnete Innenelektroden aufweisen. Das Überspannungsschutzbauelement gemäß dieser alternativen Ausführungsform kann eine verbesserte Stromtragfähigkeit aufweisen. Außerdem kann es in dem Überspannungsschutzbauelement gemäß der alternativen Ausführungsform mehrmals zu einem Durchschlag kommen bis das Überspannungsschutzbauelement defekt ist und ausgetauscht werden muss.

Zwischen der zumindest einen Innenelektrode und der auf der zumindest einen Seitenfläche angeordneten Außenelektrode kann eine Funkenstrecke ausgebildet sein. Die Funkenstrecke kann ausgelöst werden, so dass es zu einem Kurzschluss der beiden Außenelektroden kommt, wenn eine zwischen den beiden Außenelektroden anliegende Spannung die Durchschlagsspannung überschreitet.

Somit kann das Überspannungsschutzbauelement derart konstruiert sein, dass das in dem Hohlraum angeordnete Gas die beiden Außenelektroden mittels einer Funkenstrecke und mittels der zumindest einen Innenelektrode leitend miteinander verbindet, wenn zwischen den Außenelektroden eine Spannung angelegt wird, die größer ist als eine Durchbruchspannung.

Die zumindest eine Innenelektrode ist auf zwei einander gegenüberliegenden Seitenflächen des Grundkörpers von der jeweiligen Seitenfläche zurückversetzt sein, wobei jeweils ein gasgefüllter Hohlraum zwischen der zumindest einen Innenelektrode und der jeweiligen Seitenfläche angeordnet ist. Ein solches Überspannungsschutzbauelement lässt sich in einem einfachen Ätzverfahren fertigen, bei dem die Innenelektrode auf beiden Seitenflächen des Grundkörpers einer Ätzlösung ausgesetzt wird. Zur Fertigung eines Überspannungsschutzbauelements mit einer Innenelektrode, die nur gegenüber einer Seitenfläche zurückgesetzt ist, muss die andere Seitenfläche mit einem Schutzlack während des Ätzschritts abgedeckt sein. Dieses Verfahren erfordert somit die zusätzlichen Schritte Aufbringen und Entfernen des Schutzlacks. Alternativ kann ein Überspannungsschutzbauelement mit zumindest einer Innenelektrode, die gegenüber genau einer Seitenfläche zurückgesetzt ist, dadurch gefertigt werden, dass das Überspannungsschutzbauelement einseitig in eine Ätzlösung eingetaucht wird. Dabei kann das Bauelement derart eingetaucht werden, dass die zweite Seitenfläche mit der Ätzlösung nicht in Kontakt kommt.

Außerdem zeichnet sich ein Überspannungsschutzbauelement, bei dem die Innenelektrode gegenüber beiden Seiten des Grundkörpers zurückgesetzt ist, ferner dadurch aus, dass die Durchbruchsspannung keine Richtungsabhängigkeit aufweist, da das Bauelement symmetrisch aufgebaut ist.

Die Innenelektrode kann Kupfer aufweisen oder aus Kupfer bestehen. Die Innenelektrode kann Wolfram aufweisen oder aus Wolfram bestehen. Die Außenelektroden können Kupfer oder Silber aufweisen oder aus einem dieser Materialien bestehen.

Die keramischen Schichten können Aluminiumoxid, mit Glasfritte versetztes Aluminiumoxid oder Zirkonoxid aufweisen. Keramische Schichten, die Aluminiumoxid, mit Glasfritte versetztes Aluminiumoxid oder Zirkonoxid aufweisen, eignen sich für das Überspannungsschutzbauelement besonders gut, da sie mit dem Sinterprozess verträglich sind, gasdicht sind und außerdem mit dem Ätzprozess der Innenelektroden kompatibel sind. Ferner ist ein Überspannungsschutzbauelement mit einer geringen Kapazität vorteilhaft. Aus diesem Grund eignen sich keramische Schichten, die Aluminiumoxid, mit Glasfritte versetztes Aluminiumoxid oder Zirkonoxid aufweisen, da diese Materialien eine kleine Dielektrizitätskonstante aufweisen.

Der Grundkörper kann eine Grundfläche aufweisen, deren Seitenlängen jeweils in einem Bereich von 0,1 mm bis 3,0 mm liegen. Als Grundfläche wird dabei die Fläche bezeichnet, deren Flächennormale parallel zur Stapelrichtung des Grundkörpers ist. Beispielsweise können die Seitenlängen der Grundfläche 0,7 mm und 1,5 betragen. Es kann sich um ein 0603 Bauelement, ein 0402 Bauelement, ein 0201 Bauelement oder ein 01005 Bauelement handeln. Bei diesen Angaben handelt es sich um eine Definition der Abmessungen des Bauelements gemäß dem EIA-Standard, in der am Anmeldetag gültigen Fassung. Beispielsweise gibt der Code 01005 an, dass das Bauelement eine Länge von 0,4 mm und eine Breite von 0,2 mm aufweist.

Es kann sich bei Überspannungsschutzbauelement um ein Bauelement für Oberflächenbestückung, ein sogenanntes surface mounted device (SMD), handeln. Dementsprechend kann das Überspannungsschutzbauelement dazu vorgesehen sein, auf einer Leiterplatine aufgelötet zu werden. Das Überspannungsschutzbauelement kann dazu lötfähiger Anschlussflächen aufweisen, die beispielsweise von den Außenelektroden gebildet werden können.

Ferner können die Außenelektroden eine galvanische Schicht aufweisen. Diese galvanische Schicht kann in einem galvanischen Verfahren nach dem Einbrennen einer Außenmetallisierung aufgebracht werden.

Ein weiterer Aspekt der vorliegenden Erfindung betrifft ein Verfahren zur Herstellung eines Überspannungsschutzbauelementes gemäß Anspruch 8

Das Verfahren weist die Schritte auf:
- Fertigen eines Grundkörpers, aufweisend zumindest eine Innenelektrode, die zwischen zwei keramischen Schichten angeordnet ist, wobei die zumindest eine Innenelektrode an die Seitenflächen des Grundkörpers heranreicht, und
- Ätzen der zumindest einen Innenelektrode auf zumindest einer Seitenfläche des Grundkörpers, sodass zwischen der zumindest einen Seitenfläche des Grundkörpers und der Innenelektrode ein Hohlraum gebildet wird,
- Aufbringen von zwei Außenelektroden, auf zwei einander gegenüberliegenden Seitenflächen des Grundkörpers.

Die Schritte können dabei vorzugsweise in der hier angegebenen Reihenfolge durchgeführt werden. Durch das Aufbringen der zwei Außenelektroden kann der Hohlraum verkapselt werden.

Durch das Ätzen der zumindest einen Innenelektrode kann der Hohlraum in einfacher Weise gefertigt werden. Zudem erlaubt es das Ätzen, den Hohlraum mit hoher Präzision in der gewünschten Tiefe zu fertigen.

Das Verfahren kann ferner den Schritt Befüllen des Hohlraums mit einem Gas aufweisen. Bei dem Gas kann es sich um ein Prozessgas handeln, das beim Einbrennen der Außenelektroden eingeschlossen wird. Bei Verwendung einer Außenelektrode aus Silber muss der Einbrand unter reduzierender Atmosphäre erfolgen, beispielsweise unter einer Stickstoffatmosphäre. Der Einbrand erfolgt unter reduzierender Atmosphäre, beispielsweise unter einer Stickstoffatmosphäre, da die Innenelektroden Kupfer oder Wolfram aufweisen können und diese Materialien eine reduzierte Atmosphäre erfordern.

Die zumindest eine Innenelektrode kann auf zwei einander gegenüberliegenden Seitenflächen des Grundkörpers geätzt werden. Alternativ kann die Innenelektrode auch nur auf einer Seitenfläche des Grundkörpers geätzt werden.

Das Verfahren kann ferner den Schritt Sintern des Grundkörpers aufweisen, wobei dieser Schritt vor dem Ätzen der Innenelektroden durchgeführt wird.

Für den Schritt des Ätzens der Innenelektroden kann eine Ätzlösung verwendet werden, bei der es sich um eine Lösung auf Basis von Natriumpersulfat, Schwefelsäure oder Eisen(iii)-chlorid handelt. Im Folgenden wird die vorliegende Erfindung anhand der Figuren beschrieben.
- Figur 1: zeigt ein Überspannungsschutzbauelement gemäß einem ersten Ausführungsbeispiel,
- Figur 2: zeigt ein Überspannungsschutzbauelement nicht gemäß der Erfindung,

- Figur 3: zeigt ein Überspannungsschutzbauelement während eines Herstellungsverfahrens,
- Figur 4: zeigt das Überspannungsschutzbauelement zu einem späteren Zeitpunkt des Herstellungsverfahrens,
- Figur 5: zeigt das Überspannungsschutzbauelement zu einem noch späteren Verfahrenszeitpunkt,
- Figur 6: zeigt das Überspannungsschutzbauelement in einer alternativen Verfahrensgestaltung.

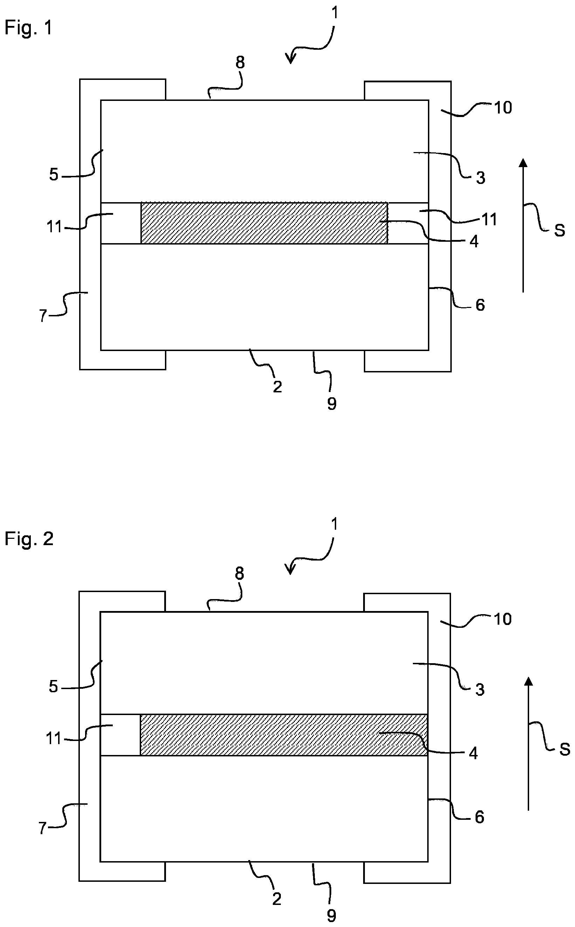

- Figur 1: zeigt ein Überspannungsschutzbauelement 1 gemäß einem ersten Ausführungsbeispiel. Das Überspannungsschutzbauelement 1 weist einen Grundkörper 2 auf. Der Grundkörper 2 weist zwei keramische Schichten 3 auf. Ferner weist der Grundkörper 2 eine Innenelektrode 4 auf, die in einer Stapelrichtung S zwischen den beiden keramischen Schichten 3 angeordnet ist.

Der Grundkörper 2 weist eine erste Seitenfläche 5 und eine zweite Seitenfläche 6 auf, wobei die zweite Seitenfläche 6 der ersten Seitenfläche 5 gegenüberliegt. Auf der ersten Seitenfläche 5 des Grundkörpers 2 ist eine erste Außenelektrode 7 angeordnet. Die erste Außenelektrode 7 bedeckt die erste Seitenfläche 5 vollständig und bedeckt ferner eine Oberseite 8 und eine Unterseite 9 des Grundkörpers 2 jeweils teilweise. Auf der zweiten Seitenfläche 6 des Grundkörpers 2 ist eine zweite Außenelektrode 10 angeordnet. Die zweite Außenelektrode 10 bedeckt die zweite Seitenfläche 6 des Grundkörpers 2 vollständig und bedeckt ebenfalls teilweise die Oberseite 8 und die Unterseite 9 des Grundkörpers 2.

Die erste und die zweite Seitenfläche 5, 6 sind jeweils derart ausgerichtet, dass ihre Flächennormalen senkrecht zur Stapelrichtung S stehen. Die Oberseite 8 und die Unterseite 9 sind derart ausgerichtet, dass ihre Flächennormalen parallel zur Stapelrichtung S sind. Die Oberseite 8 und die Unterseite 9 sind parallel zur Innenelektrode 4.

Die Innenelektrode 4 ist gegenüber der ersten Seitenfläche 5 des Grundkörpers 2 zurückgesetzt. Dementsprechend ist ein Hohlraum 11 zwischen der ersten Außenelektrode 7 und der Innenelektrode 4 ausgebildet. Dieser Hohlraum 11 ist mit einem Gas gefüllt.

Ferner ist die Innenelektrode 4 auch gegenüber der zweiten Seitenfläche 6 zurückgesetzt, sodass zwischen der zweiten Außenelektrode 10 und der Innenelektrode 4 ebenfalls ein Hohlraum 11 ausgebildet ist. Dieser Hohlraum 11 ist auch mit einem Gas gefüllt.

Das Überspannungsschutzbauelement 1 kann insbesondere als Ableiter verwendet werden. Es dient somit als Kurzschlussschalter im Fall einer Überspannung. Das Überspannungsschutzbauelement 1 ermöglicht einen Überspannungsschutz für eine weitere mit ihm verschaltete Schaltungsanordnung.

Ein Kurzschluss in dem Überspannungsschutzbauelement kann durch eine Funkenstrecke realisiert werden, die in den gasgefüllten Hohlräumen 11 ausgebildet ist. Die erste Außenelektrode 7 und die zweite Außenelektrode 10 können jeweils mit der zugehörigen Schaltungsanordnung verschaltet sein. Dementsprechend kann an der ersten Außenelektrode 7 und an der zweiten Außenelektrode 10 jeweils ein elektrisches Potential anliegen. Die Innenelektrode 4 kann als sogenannte Floating Electrode verwendet werden, sodass an ihr kein elektrisches Potential anliegt.

Das in dem gasgefüllten Hohlraum 11 angeordnete Gas wirkt zunächst isolierend. Überschreitet jedoch die Potentialdifferenz zwischen einer der Außenelektroden 7, 10 und der Innenelektrode 4 eine Durchschlagsspannung, so wird das Gas ionisiert und bildet eine Funkenstrecke aus, über die die jeweilige Außenelektrode 7, 10 mit der Innenelektrode 4 leitend verbunden wird. Ist auch die Potentialdifferenz zwischen der jeweils anderen Außenelektrode 7, 10 und der Innenelektrode 4 größer als die Durchschlagsspannung, so wird auch das Gas in dem jeweils anderen Hohlraum 11 ionisiert und es bildet sich eine weitere Funkenstrecke. Die beiden Außenelektroden 7, 10 können nunmehr über die Funkenstrecken und die Innenelektrode 4 leitend miteinander verbunden sein. Dadurch kann es zu einem Kurzschluss kommen.

Die Durchschlagsspannung wird durch den Abstand zwischen der Innenelektrode 4 und den beiden Außenelektroden 7, 10, das verwendete Füllgas und den Fülldruck bestimmt. Die Durchschlagsspannung kann mittels des Paschen-Gesetzes berechnet werden. Das Überspannungsschutzbauelement 1 kann für Durchschlagsspannung von 100 V oder mehr ausgelegt sein.

Die Innenelektrode 4 kann Kupfer aufweisen oder aus Kupfer bestehen. Alternativ kann die Innenelektrode 4 Wolfram aufweisen oder aus Wolfram bestehen. Bei dem in Figur 1 gezeigten Überspannungsschutzbauelement 1 sind die Außenelektroden 7, 10 nicht mit der Innenelektrode 4 unmittelbar verbunden. Daher kann für die Außenelektroden 7, 10 ein anderes Material verwendet werden als für die Innenelektroden 4. Die Außenelektroden 7, 10 können beispielsweise Silber aufweisen.

Figur 2 zeigt ein Überspannungsschutzbauelement 1 nicht gemäß der Erfindung Das Überspannungsschutzbauelement 1 gemäß Fig.2 unterscheidet sich von dem in Figur 1 gezeigten Überspannungsschutzbauelement 1 dadurch, dass ein Hohlraum 11 lediglich zwischen der Innenelektrode 4 und der ersten Außenelektrode 7 vorgesehen ist. Die Innenelektrode 4 ist bis zur zweiten Seitenfläche 6 des Grundkörpers 2 herausgeführt und liegt dementsprechend an der zweiten Außenelektrode 10 an. Die zweite Außenelektrode 10 und die Innenelektrode 4 sind elektrisch miteinander kontaktiert. Die Innenelektrode 4 wird daher nicht als Floating Electrode verwendet. Stattdessen liegt an der Innenelektrode 4 das gleiche Potential an wie an der zweiten Außenelektrode 10.

Das Überspannungsschutzbauelement 1 gemäß Fig.2 zeichnet sich durch eine geringe Grenzspannung aus. Die Funkenstrecke muss hier nur einen Hohlraum 11 überwinden, um die beiden Außenelektroden 7, 10 miteinander kurzzuschließen. Daher ist dieses bereits bei einer geringeren Spannung möglich als in dem ersten Ausführungsbeispiel.

Bei dem Überspannungsschutzbauelement gemäß Fig.2 können vorzugsweise Außenelektroden 7, 10 verwendet werden, die das gleiche Material wie die Innenelektrode 4 aufweisen. Die Innenelektrode 4 und die Außenelektroden 7, 10 weisen hier beispielsweise Kupfer auf.

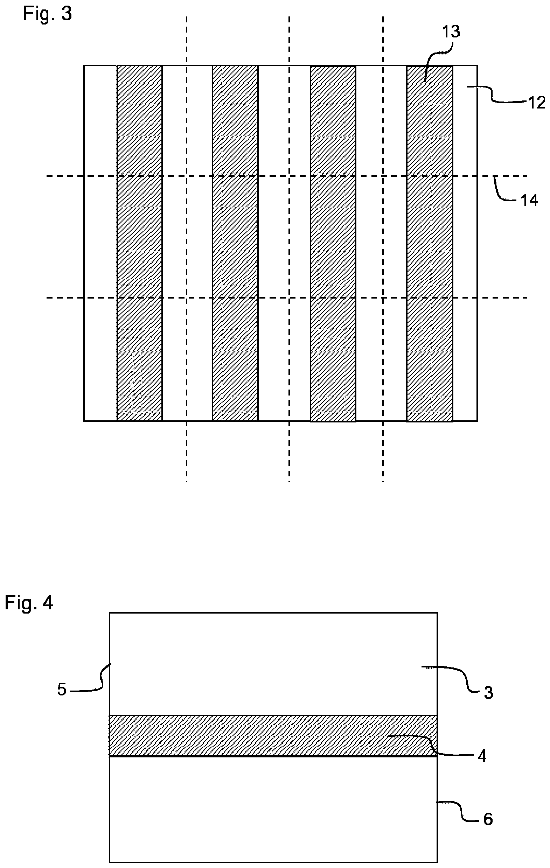

Im Folgenden wird anhand der Figuren 3 bis 5 ein Verfahren zur Herstellung des Überspannungsschutzbauelementes 1 gemäß dem ersten Ausführungsbeispiel beschrieben.

Figur 3 zeigt eine bedruckte Grünfolie 12, aus der eine Vielzahl von Überspannungsschutzbauelementen 1 gefertigt wird. Aus der Grünfolie 12 wird dabei später eine keramische Schicht 3 des Grundkörpers 2 gefertigt. Auf der Grünfolie 12 sind Streifen eines elektrisch leitfähigen Materials 13 aufgedruckt, aus denen die Innenelektroden 4 des Überspannungsschutzbauelementes 2 gefertigt werden. Bei dem Material 13 kann es sich um eine Kupferpaste handeln.

Um die Anzahl der Durchschläge bis zum Defekt des Überspannungsschutzbauelements 1 zu erhöhen, können statt einer einzelnen zwischen zwei keramischen Schichten angeordneten Innenelektrode 4 auch mehrere schmalere nebeneinanderliegende Innenelektroden 4 verwendet werden. In diesem Fall würde statt dem einen Streifen aus Kupferpaste mehrere dünne Streifen aus Kupferpaste aufgetragen werden.

Bei einer solchen Ausgestaltung des Überspannungsschutzbauelements 1 kann sich allerdings Stromtragfähigkeit des Bauelementes 1 verringern.

Die bedruckten Grünfolien 12 werden nun übereinander gestapelt. Jedes Bauelement 1 im Grünzustand kann eine oder mehrere bedruckte Folien aufweisen. Zur Fertigung eines Überspannungsschutzbauelements 1 gemäß dem ersten Ausführungsbeispiel wird ein Stapel aus einer bedruckten Grünfolie und einer unbedruckten Grünfolie gebildet. Zur Fertigung eines alternativen Überspannungsschutzbauelements 1 mit mehreren in Stapelrichtung übereinander angeordneten Innenelektroden 4 können mehrere bedruckte Grünfolien übereinander gestapelt werden.

Nach dem Stapeln wird der Stapel aus bedruckten Grünfolien 12 gepresst. In einem nächsten Verfahrensschritt werden die Grünfolien 12 entlang der in Figur 3 gestrichelt eingezeichneten Trennlinien 14 vereinzelt.

Anschließend wird der Stapel gesintert und eventuell gescheuert. Figur 4 zeigt ein Überspannungsschutzbauelement 1 nach diesen beiden Schritten.

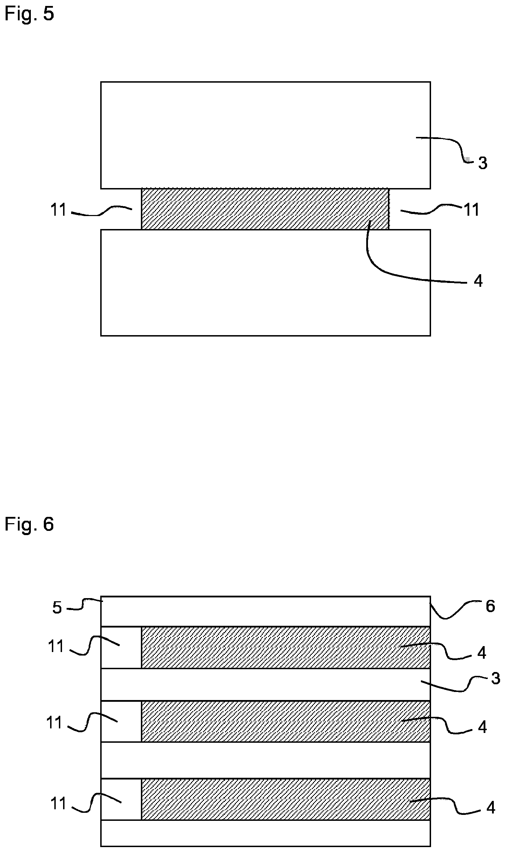

In einem weiteren Verfahrensschritt werden die Innenelektroden 4 auf zumindest einer Seitenfläche 5, 6 des Grundkörpers 2 geätzt, sodass sich zwischen der zumindest einen Seitenfläche 5, 6 des Grundkörpers 2 und der Innenelektrode 4 ein Hohlraum 11 bildet. Figur 5 zeigt ein Bauelement 1 nach der Durchführung dieses Schrittes, wobei hier beidseitig auf der ersten und auf der zweiten Seitenfläche 5, 6 die Innenelektrode 4 geätzt wurde. Der Ätzschritt wird dabei derart durchgeführt, dass Material von der Innenelektrode 4 abgetragen wird. Es bildet sich dadurch ein Ätzgraben, der im Überspannungsschutzbauelement 1 den Hohlraum 11 bildet. Abhängig von der Dauer des Ätzschrittes und der verwendeten Ätzlösung kann die Tiefe des Ätzgrabens auf einen gewünschten Wert eingestellt werden.

Für den Schritt des Ätzens der Innenelektroden 4 wird das Bauteil einer Ätzlösung ausgesetzt, beispielsweise einer Lösung auf Basis von Natriumpersulfat, Schwefelsäure oder Eisen(iii)-chlorid. Die Länge des zurückgeätzten Bereiches, die der Länge des Hohlraums 11 entspricht, kann beispielsweise zwischen 5 und 20 µm liegen. Es kann sich um ein nasschemisches Ätzverfahren handeln.

In einem weiteren Verfahrensschritt werden nunmehr die Außenelektroden 7, 10 auf der ersten und der zweiten Seitenfläche 5, 6 aufgebracht. Die Außenelektroden 7, 10 können beispielsweise dadurch erzeugt werden, dass der in Figur 4 gezeigte Stapel in eine Metallisierungspaste eingetaucht wird und die Metallisierungspaste anschließend eingebrannt wird. Ferner könnte die Metallisierungspaste galvanisiert werden, um eine galvanische Schicht auf der Außenelektrode zu erzeugen.

In dem Verfahrensschritt des Aufbringens der Außenelektroden 7, 10 werden die Hohlräume 11 verkapselt. Dementsprechend müssen in diesem Verfahrensschritt auch die Hohlräume 11 mit dem Gas befüllt werden. Es ergibt sich nunmehr das in Figur 1 gezeigte Überspannungsschutzbauelement 1.

Figur 6 zeigt das Überspannungsschutzbauelement 1 nach der Durchführung eines alternativen Ätzverfahrens, bei dem die Innenelektrode 4 lediglich auf der ersten Seitenfläche 5 des Grundkörpers selektiv geätzt wurde. Hierbei wird die zweite Seitenfläche 6 des Grundkörpers vor dem Ätzprozess maskiert. Beispielsweise kann der Grundkörper 2 mit der zweiten Seitenfläche 6 vor dem Ätzprozess in einen Schutzlack eingetaucht werden. Alternativ kann der Grundkörper 2 nur mit der ersten Seitenfläche 5 in eine Ätzlösung eingetaucht werden, so dass die zweite Seitenfläche 6 nicht mit der Ätzlösung in Berührung kommt und dementsprechend die Innenelektrode 4 nicht auf der zweiten Seitenfläche 6 geätzt wird. Die Innenelektrode 4 schließt somit bündig mit der zweiten Seitenfläche 6 ab und ist von der ersten Seitenfläche 5 zurückgesetzt.

Das in Figur 6 gezeigte Überspannungsschutzbauelement weist mehrere übereinander angeordnete Innenelektroden 4 auf, wobei zwischen zwei Innenelektroden 4 jeweils eine keramische Schicht 3 angeordnet ist.

### Bezugszeichenliste

- 1: Überspannungsschutzbauelement
- 2: Grundkörper
- 3: keramische Schicht
- 4: Innenelektrode
- 5: erste Seitenfläche
- 6: zweite Seitenfläche
- 7: erste Außenelektrode
- 8: Oberseite
- 9: Unterseite
- 10: zweite Außenelektrode
- 11: Hohlraum
- 12: Grünfolie
- 13: elektrisch leitfähiges Material
- 14: Trennlinie

- S: Stapelrichtung

## Patentansprüche

1. Überspannungsschutzbauelement (1),
aufweisend einen Grundkörper (2), der eine erste Seitenfläche (5) und eine zweite Seitenfläche (6) aufweist, wobei die zweite Seitenfläche (6) der ersten Seitenfläche (5) gegenüberliegt, wobei auf der ersten Seitenfläche (5) des Grundkörpers (2) eine erste Außenelektrode (7) angeordnet ist, wobei auf der zweiten Seitenfläche (6) des Grundkörpers (2) eine zweite Außenelektrode 10 angeordnet ist,
wobei der Grundkörper (2) zumindest eine Innenelektrode (4) aufweist, die zwischen zwei keramischen Schichten (3) angeordnet ist und an jeder der zwei keramischen Schichten (3) anliegt, wobei die zumindest eine Innenelektrode (4) von der ersten Seitenfläche (6) des Grundkörpers (2) zurückversetzt ist, wobei zwischen der zumindest einen Innenelektrode (4) und der ersten Außenelektrode (7) ein erster gasgefüllter Hohlraum (11) ausgebildet ist, wobei die zumindest eine Innenelektrode (4) von der zweiten Seitenflächen (6) des Grundkörpers (2) zurückversetzt ist und wobei ein zweiter gasgefüllter Hohlraum (11) zwischen der zumindest einen Innenelektrode (4) und der zweiten Außenelektrode (10) ausgebildet ist.

2. Überspannungsschutzbauelement (1) gemäß Anspruch 1, dass derart konstruiert ist, dass das in dem Hohlraum (11) angeordnete Gas die beiden Außenelektroden (7, 10) mittels einer Funkenstrecke und mittels der zumindest einen Innenelektrode (4) leitend miteinander verbindet, wenn zwischen den Außenelektroden (7, 10) eine Spannung angelegt wird, die größer ist als eine Durchbruchspannung.

3. Überspannungsschutzbauelement (1) gemäß einem der vorherigen Ansprüche,
wobei die zumindest eine Innenelektrode (4) Kupfer oder Wolfram aufweist.

4. Überspannungsschutzbauelement (1) gemäß einem der vorherigen Ansprüche,
wobei die Außenelektroden (7, 10) Kupfer oder Silber aufweisen.

5. Überspannungsschutzbauelement (1) gemäß einem der vorherigen Ansprüche,
wobei die keramischen Schichten (3) Aluminiumoxid, mit Glasfritte versetztes Aluminiumoxid oder Zirkonoxid aufweisen.

6. Überspannungsschutzbauelement (1) gemäß einem der vorherigen Ansprüche,
wobei der Grundkörper (2) eine Grundfläche aufweisen, deren Seitenlängen jeweils in einem Bereich von 0,1 mm bis 3,0 mm liegen.

7. Überspannungsschutzbauelement (1) gemäß einem der vorherigen Ansprüche,
wobei es sich bei dem Überspannungsschutzbauelement (1) um ein Bauelement für Oberflächenbestückung, surface mounted device, handelt.

8. Verfahren zur Herstellung eines Überspannungsschutzbauelements (1) gemäß Anspruch 1, aufweisend die Schritte:
- Fertigen eines Grundkörpers (2), aufweisend zumindest eine Innenelektrode (4), die zwischen zwei keramischen Schichten (3) angeordnet ist, wobei die zumindest eine Innenelektrode (4) an die Seitenflächen (5, 6) des Grundkörpers (2) heranreicht,
- Ätzen der zumindest einen Innenelektrode (4) auf zumindest einer Seitenfläche (5, 6) des Grundkörpers (2), so dass zwischen der zumindest einen Seitenfläche (5, 6) des Grundkörpers (2) und der Innenelektrode (4) ein Hohlraum (11) gebildet wird,
- Aufbringen von zwei Außenelektroden (7, 10), auf zwei einander gegenüberliegenden Seitenflächen (5, 6) des Grundkörpers (2).

9. Verfahren gemäß Anspruch 8,
ferner aufweisend den Schritt:
- Befüllen des Hohlraums (11) mit einem Gas.

10. Verfahren gemäß einem der Ansprüche 8 oder 9, wobei die zumindest eine Innenelektrode (4) auf zwei einander gegenüberliegenden Seitenflächen (5, 6) des Grundkörpers (2) geätzt wird.

11. Verfahren gemäß einem der Ansprüche 8 bis 10, ferner aufweisend den Schritt:
- Sintern des Grundkörpers (2), wobei dieser Schritt vor dem Ätzen der Innenelektrode (4) durchgeführt wird.

12. Verfahren gemäß einem der Ansprüche 8 bis 11, wobei für den Schritt des Ätzens der zumindest einen Innenelektrode (4) eine Ätzlösung auf Basis von Natriumpersulfat, Schwefelsäure oder Eisen(iii)-chlorid verwendet wird.

## Claims

1. Surge protection component (1) having a main body (2) which has a first lateral face (5) and a second lateral face (6), wherein the second lateral face (6) lies opposite the first lateral face (5), wherein a first outer electrode (7) is arranged on the first lateral face (5) of the main body (2), wherein a second outer electrode (10) is arranged on the second lateral face (6) of the main body (2), wherein the main body (2) has at least one inner electrode (4), which is arranged between two ceramic layers (3) and bears on each of the two ceramic layers (3), wherein the at least one inner electrode (4) is set back from the first lateral face (6) of the main body (2), wherein a first gas-filled cavity (11) is provided between the at least one inner electrode (4) and the first outer electrode (7), wherein the at least one inner electrode (4) is set back from the second lateral face (6) of the main body (2), and wherein a second gas-filled cavity (11) is provided between the at least one inner electrode (4) and the second outer electrode (10).

2. Surge protection component (1) according to Claim 1, constructed in such a way that the gas arranged in the cavity (11) connects the two outer electrodes (7, 10) conductively to each other by means of a spark gap and by means of the at least one inner electrode (4) when a voltage greater than a breakdown voltage is applied between the outer electrodes (7, 10).

3. Surge protection component (1) according to one of the preceding claims, wherein the at least one inner electrode (4) has copper or tungsten.

4. Surge protection component (1) according to one of the preceding claims, wherein the outer electrodes (7, 10) have copper or silver.

5. Surge protection component (1) according to one of the preceding claims, wherein the ceramic layers (3) have aluminium oxide, or aluminium oxide with added glass frit, or zirconium oxide.

6. Surge protection component (1) according to one of the preceding claims, wherein the main body (2) has a base surface whose side lengths each lie in a range of 0.1 mm to 3.0 mm.

7. Surge protection component (1) according to one of the preceding claims, wherein the surge protection component (1) is a surface mounted device.

8. Method for producing a surge protection component (1) according to Claim 1, having the steps of:
- manufacturing a main body (2) having at least one inner electrode (4) arranged between two ceramic layers (3), wherein the at least one inner electrode (4) reaches to the lateral faces (5, 6) of the main body (2),
- etching the at least one inner electrode (4) on at least one lateral face (5, 6) of the main body (2), such that a cavity (11) is formed between the at least one lateral face (5, 6) of the main body (2) and the inner electrode (4),
- applying two outer electrodes (7, 10) to two mutually opposite lateral faces (5, 6) of the main body (2) .

9. Method according to Claim 8, moreover having the step of:
- filling the cavity (11) with a gas.

10. Method according to either of Claims 8 and 9, wherein the at least one inner electrode (4) is etched on two mutually opposite lateral faces (5, 6) of the main body (2) .

11. Method according to one of Claims 8 to 10, moreover having the step of:
- sintering the main body (2), wherein this step is carried out before the etching of the inner electrode (4) .

12. Method according to one of Claims 8 to 11, wherein the step of etching the at least one inner electrode (4) is carried out using an etching solution based on sodium persulfate, sulfuric acid or iron(III) chloride.

## Revendications

1. Composant de protection contre les surtensions (1), ledit composant comportant un corps de base (2) qui comporte une première surface latérale (5) et une deuxième surface latérale (6), la deuxième surface latérale (6) étant opposée à la première surface latérale (5), une première électrode extérieure (7) étant disposée sur la première surface latérale (5) du corps de base (2), une deuxième électrode extérieure (10) étant disposée sur la deuxième surface latérale (6) du corps de base (2),
le corps de base (2) comportant au moins une électrode intérieure (4) qui est disposée entre deux couches de céramique (3) et qui vient en appui sur chacune des deux couches de céramique (3), l'au moins une électrode intérieure (4) étant en retrait de la première surface latérale (6) du corps de base (2), une première cavité (11) remplie de gaz étant formée entre l'au moins une électrode intérieure (4) et la première électrode extérieure (7), l'au moins une électrode intérieure (4) étant en retrait de la deuxième surface latérale (6) du corps de base (2) et une deuxième cavité (11) remplie de gaz étant formée entre l'au moins une électrode intérieure (4) et la deuxième électrode extérieure (10) .

2. Composant de protection contre les surtensions (1) selon la revendication 1, ledit composant étant conçu de manière à ce que le gaz disposé dans la cavité (11) relie de manière conductrice les deux électrodes extérieures (7, 10) l'une à l'autre au moyen d'un éclateur et au moyen de l'au moins une électrode intérieure (4) si une tension, qui est supérieure à une tension de claquage, est appliquée entre les électrodes extérieures (7, 10).

3. Composant de protection contre les surtensions (1) selon l'une des revendications précédentes, l'au moins une électrode intérieure (4) comportant du cuivre ou du tungstène.

4. Composant de protection contre les surtensions {1) selon l'une des revendications précédentes, les électrodes extérieures (7, 10) comportant du cuivre ou de l'argent.

5. Composant de protection contre les surtensions (1) selon l'une des revendications précédentes, les couches de céramique (3) comportant de l'oxyde d'aluminium, de l'oxyde d'aluminium mélangé à de la fritte de verre ou à de l'oxyde de zirconium.

6. Composant de protection contre les surtensions {1) selon l'une des revendications précédentes, le corps de base (2) comportant une zone de base dont les longueurs latérales sont dans une gamme allant de 0,1 mm à 3,0 mm.

7. Composant de protection contre les surtensions (1) selon l'une des revendications précédentes, le composant de protection contre les surtensions (1) étant un composant destiné au montage en surface, surface mounted device.

8. Procédé de fabrication d'un composant de protection contre les surtensions (1) selon la revendication 1, ledit procédé comprenant les étapes suivantes :
- fabriquer un corps de base (2) comportant au moins une électrode intérieure (4) qui est disposée entre deux couches de céramique (3), l'au moins une électrode intérieure (4) atteignant les surfaces latérales (5, 6) du corps de base (2),
- graver l'au moins une électrode intérieure (4) sur au moins une surface latérale (5, 6) du corps de base (2) de façon à former une cavité (11) entre l'au moins une surface latérale (5, 6) du corps de base (2) et l'électrode intérieure (4),
- appliquer deux électrodes extérieures (7, 10) sur deux surfaces latérales opposées (5, 6) du corps de base (2).

9. Procédé selon la revendication 8, comportant en outre l'étape suivante :
- remplir la cavité (11) avec un gaz.

10. Procédé selon l'une des revendications 8 et 9, l'au moins une électrode intérieure (4) étant gravée sur deux surfaces latérales opposées (5, 6) du corps de base (2).

11. Procédé selon l'une des revendications 8 à 10, comprenant en outre l'étape suivante :
- fritter le corps de base (2), cette étape étant réalisée avant la gravure de l'électrode intérieure (4) .

12. Procédé selon l'une des revendications 8 à 11, une solution d'attaque à base de persulfate de sodium, d'acide sulfurique ou de chlorure de fer (iii) étant utilisée pour l'étape de gravure de l'au moins une électrode intérieure (4).
